# EUROPÄISCHE PATENTSCHRIFT

(11) **EP 3 601 007 B1**
(45) Veröffentlichungstag und Bekanntmachung des Hinweises auf die Patenterteilung: **26.05.2021**
(21) Anmeldenummer: 18723745.8
(22) Anmeldetag: 27.04.2018
(51) Int. Cl.: B61D 35/00, C02F 1/04

(54) **SCHIENENFAHRZEUG MIT EINER VORRICHTUNG ZUR ABWASSERWIEDERAUFBEREITUNG UND VERFAHREN ZUR ABWASSERWIEDERAUFBEREITUNG EINES SCHIENENFAHRZEUGS**
RAIL VEHICLE HAVING A DEVICE FOR WASTEWATER REPROCESSING AND METHOD FOR THE WASTEWATER REPROCESSING OF A RAIL VEHICLE
VÉHICULE FERROVIAIRE DOTÉ D'UN DISPOSITIF DE RETRAITEMENT DES EAUX USÉES ET PROCÉDÉ DE RETRAITEMENT DES EAUX USÉES D'UN VÉHICULE FERROVIAIRE

(30) Priorität: 24.05.2017 DE 102017208852
(43) Veröffentlichungstag der Anmeldung: 05.02.2020
(73) Patentinhaber: Siemens Mobility GmbH, 81739 München (DE)
(72) Erfinder: KELEMEN, Matthias, 45359 Essen (DE); SCHNEIDER, Christian, 46535 Dinslaken (DE); ZIEGMANN, Markus, 91083 Baiersdorf (DE)
(86) Internationale Anmeldenummer: PCT/EP2018/060851
(87) Internationale Veröffentlichungsnummer: WO 2018/215165

(56) Entgegenhaltungen:
- EP-A2- 1 401 548
- DE-A1- 4 200 296
- DE-A1-102004 028 036
- DE-A1-102014 220 666
- DE-B3-102013 205 084

## Beschreibung

Die Erfindung betrifft ein Schienenfahrzeug mit einer Vorrichtung zur Abwasserwiederaufbereitung sowie ein Verfahren zur Abwasserwiederaufbereitung eines Schienenfahrzeugs umfassend wenigstens einen Verdunster zur Verdunstung des Abwassers durch Zuführung von thermischer Energie und überströmender Luft.

In Nasszellen von Schienenfahrzeugen kann Frischwasser für das WC und das Handwaschbecken zur Verfügung gestellt werden. Das verbrauchte Wasser des WCs inklusive des Eintrages durch den Fahrgast (Kot, Urin, Toilettenpapier, Seife, usw.) wird in Abwasserbehältern gesammelt und darf aufgrund seiner hygienischen Relevanz nicht auf das Gleis abgelassen werden. Die Abwasserbehälter sind beispielsweise so ausgelegt, dass sie das Volumen einer üblichen, dreitägigen Benutzung sammeln können. Alle drei Tage das Abwasser aus den Tanks der Schienenfahrzeuge abzusaugen, bedeutet einen hohen Aufwand und damit hohe Betriebskosten für die Betreiber der Schienenfahrzeuge. Das Abwasser besteht dabei zu einem großen Anteil, beispielsweise bis zu ca. 95%, aus Flüssigkeit, insbesondere Wasser.

Das Wasser aus dem Handwaschbecken kann unter bestimmten Voraussetzungen auf das Gleis abgelassen werden. Dadurch kann die Menge des zu sammelnden Wassers reduziert werden. Darüber hinaus existieren Systeme zur Aufbereitung des Handwaschwassers. So kann das Grauwasser mechanisch mit Filtern oder über Sedimentation der Feststoffe aufbereitet und das so aufbereitete Handwaschwasser dem WC zur Verfügung gestellt werden. Die DE 10 2013 205 084 B3 offenbart eine Aufbereitungsvorrichtung für Grauwasser mit einem Kulissenfilter.

Es ist grundsätzlich auch für WC-Abwasser möglich, es so aufzubereiten, dass sowohl Feststoffe als auch gelöste Wasserinhaltsstoffe von der flüssigen Phase abgetrennt werden und das gereinigte Wasser anschließend auf das Gleis abgelassen werden kann. Ein Beispiel für ein solches System ist der Bioreaktor der Firma AKW A+V Protec Rail GmbH. Gemäß der Produktbroschüre "Der Protec Bioreaktor", http://www.akwauv-protec.com/xist4c/download/web/Produktbrosch%25C3%25BCre%2BBi oreaktor%2B_uplId_40810 coId_12505_.pdf, abgerufen am 30.10.2015, wird das Abwasser in dem dort beschriebenen Bioreaktor biologisch aufbereitet und anschließend auf das Gleis abgelassen.

Da das WC-Abwasser, wie oben bereits ausgeführt, hauptsächlich aus Flüssigkeit besteht, kann so ein Großteil des ansonsten im Abwasserbehälter zu sammelnden Volumens auf das Gleis abgelassen werden. Dadurch wird das Absaugintervall von drei Tagen bei einem Sammeltank auf ca. zwei bis sechs Monate ausgedehnt. Dadurch kann viel Servicezeit eingespart werden. Der technische Aufwand ist jedoch deutlich höher. Der Bioreaktor hat einen hohen Energie- und Druckluftbedarf. Die Aufbereitung hängt von der Aktivität der Biologie ab. Ist sie nicht aktiv, findet keine Aufbereitung statt. Die Funktion der biologischen Komponente lässt sich im Betrieb nicht überwachen.

Die Druckschriften DE 10 2010 035 171 A1, DE 10 2011 081 007 A1 und DE 10 2011 081 015 A1 offenbaren einen Prozess zur Wasseraufarbeitung der Siemens AG, der für industrielle Anwendungen unter dem Namen "EvaCon" bekannt geworden ist.

Die Offenlegungsschrift DE 10 2004 028 036 A1 lehrt die Aufarbeitung von Abwasser für ein Flugzeug. In mehreren Stufen werden Feststoffe aus dem Abwasser herausgefiltert sowie weitere Inhaltsstoffe an chemisch aktiven Substanzen gebunden. Anschließend wird das Abwasser verdampft und einer Brennstoffaufbereitungsanlage für Brennstoffzellen zugeführt oder an die Umwelt abgegeben.

Die Druckschrift DE 42 00 296 A1 offenbart ein Schienenfahrzeug mit einer Einrichtung zum Verdampfen des Abwassers und einen zur Atmosphäre hin offenen Kondensationsraum aufweist, sowie einen Bioreaktor zur Zersetzung der Feststoffanteile im Abwasser. Teile des entstehenden Wasserdampfes entweichen, das anfallende Kondensat wird abgeführt.

Die Offenlegungsschrift DE 10 2015 222 989 A1 offenbart ebenfalls eine gattungsgemäße Vorrichtung und ein gattungsgemäßes Verfahren zur Abwasserwiederaufbereitung in einem Schienenfahrzeug.

Der Erfindung liegt die Aufgabe zugrunde, eine zuverlässige Wiederaufarbeitung von Abwässern in einem Schienenfahrzeug vorzuschlagen, um somit die Betriebskosten des Schienenfahrzeugs zu senken.

Gelöst wird die Aufgabe durch die Gegenstände der unabhängigen Patentansprüche 1 und 12. Weiterbildungen und Ausgestaltungen der Erfindung finden sich in den Merkmalen der abhängigen Patentansprüche wieder.

Ein erfindungsgemäßes Fahrzeug, insbesondere ein spurgebundenes Fahrzeug, insbesondere ein Schienenfahrzeug, insbesondere des Personenverkehrs, umfasst wenigstens eine Vorrichtung zur Abwasserwiederaufbereitung, welche wenigstens einen Verdunster zur Verdunstung des Abwassers durch Zuführung von thermischer Energie und überströmender Luft umfasst, wobei der Verdunster eine Vorrichtung zur Zuführung von Luft aus dem Schienenfahrzeug und zur Überströmung des zu verdunstenden Abwassers umfasst.

Der Verdunster dient zur Verdunstung des Abwassers, insbesondere eines vorgefilterten Abwassers, welches dann als flüssiges Filtrat bezeichnet werden kann, durch Zuführung von thermischer Energie als Vorrichtung zur Aufspaltung des Abwassers bzw. des flüssigen Filtrats in ein Kondensat und ein Konzentrat, insbesondere mittels eines thermischen Trennverfahrens. Die Aufspaltung des flüssigen Filtrats in ein Kondensat und ein Konzentrat im Verdunster erfolgt somit durch ein thermisches Trennverfahren. Als thermische Trennverfahren sind ein- oder mehrstufige Verdunstungsverfahren bekannt geworden. Der Verdunster als Vorrichtung zur Aufspaltung des flüssigen Filtrats in ein Kondensat und ein Konzentrat ist entsprechend geeignet ausgebildet zur Ausführung eines thermischen Trennverfahrens.

Die Verdunstung des Abwassers erfolgt durch Zuführung von thermischer Energie und überströmender Luft. Solche Verdunster sind grundsätzlich bekannt, z.B. als Rieselfilmverdunster oder als Gegenstromverdunster. Dort werden Wassertropfen von Luft umströmt. Eine Umströmung soll ebenfalls als mit umfasst gelten. Weitergebildet ist der Verdunster als Gegenstromverdunster oder als Rieselfilmverdunster ausgebildet.

Die dem Verdunster zugeführte Luft dient zur Kühlung und zur Aufnahme von verdunstetem Abwasser und stammt dabei weitergebildet aus dem Innern des Schienenfahrzeugs, insbesondere aus dem Innenraum, beispielsweise direkt aus einer Sanitärzelle des Schienenfahrzeugs, oder aus einem Belüftungs- oder Klimaanlagensystem des Schienenfahrzeugs. Diese ist relativ trocken und kühl. Dazu kann das Schienenfahrzeug eine entsprechende Absaugvorrichtung im Innern aufweisen. Insbesondere Sanitärzellen weisen üblicherweise eine Absaugvorrichtung auf, deren Luft dann dem Verdunster zugeleitet wird. Die Absaugvorrichtung ist weitergebildet drehzahlgeregelt ausgeführt, so dass die Luftmenge geregelt werden kann. Im Verdunster wird diese kalte und trockene Luft durch die Verdunstung des Abwassers, beispielsweise durch das im Rieselfilmverdunster verrieselte Abwasser, erwärmt und befeuchtet.

Des Weiteren kann der Verdunster eine Vorrichtung zur zumindest teilweisen Abführung zumindest eines Teils des verdunsteten Abwassers umfassen. Dazu wird die dann angefeuchtete Luft aus dem Verdunster geführt.

Gemäß einer Weiterbildung der Erfindung ist die Vorrichtung zur Abwasserwiederaufbereitung derart ausgebildet, dass die Luft im Anschluss an die Überströmung des zu verdunstenden Abwassers an die Umgebung des Schienenfahrzeugs abgegeben wird. Somit wird wenigstens ein Teil des verdunsteten Abwassers nach der Um- oder Überströmung des zu verdunstenden Abwassers an die Umgebung abgegeben.

Die aus dem Verdunster abgeführte Luft mit zumindest einem Teil des verdunsteten Abwassers kann weitergebildet einem Kondensator zur Abscheidung des Kondensats durch Kondensation des verdunsteten Filtrats zugeführt werden. Entsprechend umfasst das Schienenfahrzeug einen solchen Kondensator.

Der Kondensator ist stromabwärts des Verdunsters und stromaufwärts der Abgabe der Luft an die Umgebung angeordnet, so dass die Luft im Anschluss an die Um- oder Überströmung des zu verdunstenden Abwassers einem Kondensator zugeführt wird.

Der Kondensator kann einen zur Umgebung offenen Kondensationsraum aufweisen, so dass zumindest ein Teil des verdampften oder verdunsteten Abwassers bzw. Filtrats nach der Passage durch den Kondensator an die Umgebung abgegeben wird. Die zumindest teilweise mit Abwasser angefeuchtete Luft wird so nach der Passage des Kondensators aus dem Fahrzeug geleitet und an die Umgebung abgegeben. Der Kondensator kann vergleichsweise klein ausfallen, der Raumbedarf und das Gewicht der Abwasseraufbereitungsvorrichtung sind also relativ gering. Im Zentrum der Erfindung liegt nicht die maximale Wasserrückgewinnung, sondern vielmehr die Minimierung der Abwassermenge nach der Aufbereitung, die als Konzentrat im Fahrzeug mitgeführt werden muss. Ein Vorteil der Erfindung besteht somit darin, dass ein großes Wasservolumen aus dem Fahrzeug geleitet wird. Durch ein solches System lassen sich bis zu 2/3 des mitgeführten Frischwassers einsparen. Der Frischwassertank lässt sich jetzt kleiner dimensionieren. Im Bereich des Abwassertanks lassen sich die Zeiten zwischen 2 Absaugungen verlängern. Das spart Service für den Betreiber.

Der Verdunster kann den Kondensator mit umfassen, wodurch Kondensator und Verdunster als ein integrales Bauteil ausgebildet sein können.

Wie bereits ausgeführt sind Verdunster allgemein Apparate zur Umwandlung einer Flüssigkeit in ihren dampfförmigen Zustand. Als Kondensatoren werden gleichermaßen Apparate bezeichnet, in welchen Stoffe vom gasförmigen Aggregatzustand in den flüssigen Aggregatzustand überführt werden.

Verdampfen ist der Phasenübergang einer Flüssigkeit oder eines Flüssigkeitsgemisches in den gasförmigen Aggregatzustand. Als Verdunstung wird eine Verdampfung von einer Flüssigkeit unterhalb ihres Siedepunktes in ein überströmendes Gas wie z.B. Luft bezeichnet. Um die Flüssigkeit zu verdampfen, wird Energie benötigt, die der Verdampfungsenthalpie entspricht. Die gleiche Menge an Energie wird freigegeben, wenn der gebildete Dampf wieder kondensiert wird.

Das bei der Verdunstung des Abwassers bzw. des flüssigen Filtrats zurückbleibende Konzentrat sammelt sich beispielsweise zunächst im sogenannten Sumpf des Verdunsters. Anschließend kann es einem Abwasserbehälter zugeführt werden, wo es beispielsweise zusammen mit dem Filterkuchen gesammelt wird. Alternativ umfasst der Abwasserbehälter den Verdunster. Der Verdunster kann also in den Abwasserbehälter integriert sein. Der Sumpf des Verdunsters fungiert somit als Abwasserbehälter.

Ein weitergebildetes Schienenfahrzeug umfasst ein Filtermedium zur Aufspaltung des Abwassers in einen Filterkuchen und ein flüssiges Filtrat. Dieses flüssige Filtrat wird dem Verdunster zugeführt. Darüber hinaus kann das Schienenfahrzeug einen Abwasserbehälter zur Sammlung des Filterkuchens und des Konzentrats aufweisen. Der Abwasserbehälter kann dabei das Filtermedium umfassen. Zusätzlich kann das Schienenfahrzeugeine Rohrleitung zur Zuführung des Kondensats zu einem Grauwasserprozess des Schienenfahrzeugs aufweisen.

Die Aufspaltung des Abwassers in einen Filterkuchen und ein flüssiges Filtrat mittels eines Filtermediums wird auch als Filtration bezeichnet. Dabei wird insbesondere in der Flüssigkeit mitgeführter Feststoff aus der Flüssigkeit heraus getrennt. Das Filtermedium, umgangssprachlich auch Filter genannt, hält dabei Feststoffe aus der Flüssigkeit zurück. Die feststoffreduzierte Phase wird bei der Filtration von Flüssigkeiten als Filtrat bezeichnet. Der an der Oberfläche des Filtermediums, beispielsweise einem Sieb, zurückbleibende Feststoff heißt Filterkuchen. Ob die feststoffreduzierte Phase feststofffrei ist, hängt natürlich von der Trenngrenze des Filtermediums ab. Feststofffrei wird üblicherweise eine Phase nach einer Mikrofiltration mit 0,45 µm Porendurchmesser bezeichnet. Einhergehend mit solch einer Mikrofiltration ist ein entsprechender Druckverlust.

Wie eingangs bereits beschrieben, beeinflusst allgemein das im Schienenfahrzeug mitgeführte Frisch- und Abwasser einerseits das Fahrzeuggewicht negativ und andererseits muss es regelmäßig nachgefüllt bzw. entleert werden, was zu hohen Wartungs- bzw. Betriebskosten führt. Durch die erfindungsgemäße Lösung lässt sich viel Frischwasser sparen, da etwa 2/3 des auf dem Schienenfahrzeug in WC-Systemen verwendeten Frischwassers für das WC benötigt werden. Zugleich verlängert sich der Wartungszyklus für das Absaugen des Abwasserbehälters deutlich.

Es gibt Untersuchungen, die zeigen, dass etwa 10% des Fahrgasteintrages aus Feststoffen (Müll, Toilettenpapier und Kot) bestehen. Da diese Feststoffe abgeschieden werden, ist das Partialvolumen dieser Feststoffe entscheidend für das Absaugintervall, da im Wesentlichen jetzt nur noch die Feststoffe abgesaugt werden müssen. Der Gesamteintrag in den Abwasserbehälter betrug vorher: Handwaschwasser (ca. 0,2 1), WC-Spülwasser (ca. 0,4-0,5 1) und der Eintrag des Fahrgastes (ca. 0,3-0,5 1, davon 10% Feststoffe). Das Handwaschwasser kann separat auf das Gleis geleitet werden. Je nach Auslegung gelangen so etwa 0,9 bis 1,2 1 pro Spülung in den Abwasserbehälter (0,7 bis 1 1, wenn das Handwaschwasser auf das Gleis geleitet wird), mit einem Feststoffanteil von 0,03 1 bis 0,05. Der Feststoffanteil bei den dem Tank zugeführten Abwässern beträgt somit insgesamt weniger als 5%. Geht man von einem gegenüber konventioneller Ausführung unverändertem Abwasserbehältervolumen aus, lässt sich so der Wartungszyklus bis der Tank voll ist etwa verzwanzigfachen. Dabei muss das Konzentrat immer noch flüssig sein, um es fördern zu können. Ein zehnmal so langes Absaugintervall ist auf diese Weise darstellbar. Da die Komponenten Platz benötigen wird von dem ursprünglichen Abwasserbehältervolumen einiges für das System benötigt werden.

Durch die gesparten Wartungskosten werden über die Lebensdauer des Systems die Kosten für die komplizierte Aufbereitung kompensiert. Für die Absaugung kann der Abwasserbehälter jetzt zusätzlich eine Spüldüse aufweisen. Bisher war das Wasser-Feststoffgemisch sehr dünnflüssig, wodurch es genügte das Gemisch abzusaugen. Durch die Trennung wird der Feststoff konzentriert, so dass für die Entleerung des Abwasserbehälters nun diese Spüldüse im Abwasserbehälter notwendig sein kann, die die Feststoffe verdünnt, so dass sie abgesaugt werden können.

Der Abwasserbehälter umfasst gemäß einer weiteren Ausführungsform der Erfindung wenigstens einen Füllstandssensor, mittels dessen Sensorsignalen die Entnahme geregelt wird, insbesondere nur bei genügend Abwasser im Abwasserbehälter.

Das Abwasser bzw. das flüssige Filtrat wird weitergebildet mittels einer Abwasserpumpe zum Verdunster gefördert. Das Schienenfahrzeug weist eine entsprechende Abwasserpumpe auf, die insbesondere drehzahlgeregelt ist, um den Fluss an Abwasser zu regeln.

Das Schienenfahrzeug umfasst weiterbildungsgemäß fürderhin wenigstens einen Sensor zur Ermittlung von Temperatur und Feuchtigkeit der dem Verdunster zugeführten Luft aus dem Schienenfahrzeug. Auch ein Sensor zur Ermittlung von Temperatur und Feuchtigkeit der aus dem Verdunster abgeführten Luft kann vorgesehen sein. Das Schienenfahrzeug kann ebenfalls einen weiteren Sensor zur Ermittlung der Temperatur des dem Verdunster zugeführten Abwassers bzw. flüssigen Filtrats umfassen. In Abhängigkeit der Temperatur des dem Verdunster zugeführten Abwassers bzw. flüssigen Filtrats kann eine Wärmezufuhr an das dem Verdunster zugeführten Abwassers bzw. flüssigen Filtrats geregelt werden. Dazu kann eine separate Heizung vorgesehen sein. Zusammen können die von den Sensoren erfassten Messwerte Aufschluss über eine Verdunstungsrate geben.

Das erfindungsgemäße Verfahren arbeitet im Gegensatz zur eingangs vorgestellten biologischen Abwasseraufbereitung des Stands der Technik rein physikalisch ohne Verwendung von Mikroorganismen, wodurch die Probleme des undefinierten Zustandes der Biologie und der Anfälligkeit der biologischen Komponenten gegenüber Reinigungsmitteln oder Desinfektionsmitteln oder Temperaturschwankungen umgangen werden. Somit ist auch die Zuverlässigkeit der Abwasseraufbereitung gesteigert.

Ein erfindungsgemäßes Verfahren zur Abwasserwiederaufbereitung in einem Schienenfahrzeug umfasst eine Verdunstung von Abwasser des Schienenfahrzeugs durch Zuführung von thermischer Energie und um- oder überströmender Luft, wobei Luft aus dem Schienenfahrzeug zur Um- oder Überströmung genutzt wird. Dazu wird beispielsweise Luft aus einem Innenraum des Schienenfahrzeugs, insbesondere aus einer Sanitärzelle, einem Verdunster zugeführt. Auch Luft aus einem Belüftungs- oder Klimatisierungssystems des Schienenfahrzeugs kann hierzu dienen.

Weiterhin kann das Verfahren eine zumindest teilweise Abführung zumindest eines Teils des verdunsteten Abwassers mittels der um- oder überströmenden Luft umfassen. Die angefeuchtete Luft wird insbesondere an die Umgebung des Fahrzeugs abgegeben, insbesondere, nachdem sie einen Kondensator passiert hat.

Vor der Verdunstung kann das Abwasser mittels Filtration in einen Filterkuchen und ein flüssiges Filtrat aufgespalten wird, wobei das flüssige Filtrat der Verdunstung zugeführt wird.

Das erfindungsgemäße Verfahren ist geeignet zum Betreiben der erfindungsgemäßen Vorrichtung zur Abwasserwiederaufbereitung des Schienenfahrzeugs. Umgekehrt ist die erfindungsgemäße Vorrichtung geeignet ausgebildet zur Ausführung des erfindungsgemäßen Verfahrens.

Ein weitergebildetes Verfahren kann weitergebildet folgende Verfahrensschritte aufweisen:
a) Aufspaltung des Abwassers in einen Filterkuchen und ein flüssiges Filtrat;
b) Aufspaltung des flüssigen Filtrats in ein Kondensat und ein Konzentrat durch ein thermisches Trennverfahren;
c) Sammeln des Filterkuchens und des Konzentrats, insbesondere in einem Abwasserbehälter;
d) Zuführen von zumindest Teilen des Kondensats zu einem Grauwasserprozess des Schienenfahrzeugs.

Wie oben bereits beschrieben, erfolgt die Aufspaltung des Abwassers in einen Filterkuchen und ein flüssiges Filtrat durch Filtration, insbesondere mittels des Filtermediums. Es werden also Partikel, in der Regel Feststoffe, während des Filtrationsvorganges vom Filtermedium zurückgehalten und lagern sich auf diesem ab. Dadurch bildet sich über die Zeit eine Partikelschicht aus, der sogenannte Filterkuchen.

Der Filterkuchen wird insbesondere in dem Abwasserbehälter gesammelt.

Das flüssige Filtrat hingegen wird einem thermischen Trennverfahren zugeführt und in ein Kondensat und ein Konzentrat aufgespalten. Analog zur Vorrichtung umfasst dieser Verfahrensschritt gemäß einer Weiterbildung folgende Verfahrensschritte:
e) Verdunstung des flüssigen Filtrats durch Zuführung von thermischer Energie, insbesondere mittels des Verdunsters;
f) Abscheidung des Kondensats durch Kondensation des verdunsteten Abwassers bzw. Filtrats, insbesondere mittels des Kondensators.

Nach erfolgter Filtration wird das gefilterte Abwasser - also das flüssige Filtrat - insbesondere dem Verdunster zugeführt. Dort wird dem flüssigen Filtrat thermische Energie zugeführt, wodurch es verdunstet. Anschließend wird das verdunstete Abwasser bzw. Filtrat insbesondere dem Kondensator zugeleitet, wo Kondensat durch Kondensation des verdunsteten Filtrats abgeschieden wird.

Kondensator und Verdunster können auch als ein integrales Bauteil ausgebildet sein. Wie oben bereits ausgeführt, kann der Verdunster auch in Abwasserbehälter integriert sein. Das bei der Verdunstung des flüssigen Filtrats zurückbleibende Konzentrat wird wiederum insbesondere in dem Abwasserbehälter gesammelt. Das Kondensat hingegen wird einem Grauwasserprozess des Schienenfahrzeugs zugeführt. Eine Variante besteht darin, zwei Behälter vorzusehen, einem für Abwasser und einem für das Konzentrat und/oder zirkulierendes Wasser.

Grauwasser ist fäkalienfreies, gering verschmutztes Abwasser, wie es üblicherweise beim Händewaschen in den Sanitäranlagen eines Schienenfahrzeugs anfällt. Es genügt keinen Trinkwasservorschriften. Grauwasser wird beispielsweise zur Toilettenspülung im Schienenfahrzeug eingesetzt oder auf das Gleis des Schienenfahrzeugs abgelassen. Der Grauwasserprozess umfasst somit zumindest das Spülen einer Toilette mit Grauwasser und/oder das Ablassen des Grauwassers auf das Gleis. Das weitergebildete, erfindungsgemäße Schienenfahrzeug umfasst wenigstens eine Toilette und/oder mindestens einen Grauwasserauslass auf ein Gleis, wobei die Rohrleitung zur Zuführung des Kondensats zu dem Grauwasserprozess mit der Toilette, insbesondere mit einem Spülwasserbehälter der Toilette, und/oder dem Grauwasserauslass strömungstechnisch verbunden ist.

Die Toilette kann somit zumindest teilweise mit dem Kondensat gespült werden. Das Kondensat kann dazu einem separaten Grauwasserbehälter, beispielsweise dem Spülwasserbehälter der Toilette, zugeführt werden, oder ein Kondensatbehälter zum Auffangen des Kondensats dient als Spülwasserbehälter der Toilette.

Gemäß einer weiteren Weiterbildung der Erfindung wird das flüssige Filtrat als Kühlmittel im thermischen Trennverfahren, insbesondere bei der Kondensation des verdunsteten Filtrats gemäß Verfahrensschritt verwendet, wodurch es sich selbst erwärmt. Gegebenenfalls umfasst das Schienenfahrzeug eine Kühleinrichtung zur Kühlung des dem Verdunster und vorab dem Wärmetauscher zugeführten Abwassers bzw. Filtrats.

Der Kondensator ist dazu beispielsweise als Wärmetauscher, z.B. als Rohrbündelwärmeübertrager, ausgebildet. Er ist dann weitergebildet so zum Filtermedium und zum Verdunster angeordnet, dass das flüssige Filtrat stromabwärts des Filtermediums und stromaufwärts des Verdunsters dem Kondensator zugeführt wird und als Kühlmedium für das stromabwärts des Verdunsters dem Kondensator zugeführte verdunstete Filtrat dient.

Eine andere Variante ist darin zu sehen, dass dem Wärmetauscher Luft aus dem Schienenfahrzeug als Kühlmedium zugeführt wird. Diese kann wiederum Luft aus einem Innenraum, insbesondere aus einer Sanitärzelle, des Schienenfahrzeugs, oder Luft aus einem Belüftungs- oder Klimatisierungssystems des Schienenfahrzeugs sein. Um Luft aus einem Innenraum, insbesondere aus einer Sanitärzelle, des Schienenfahrzeugs abzuführen kann das Schienenfahrzeug eine entsprechende Absaugvorrichtung aufweisen.

Ein Wärmetauscher, auch Wärmeübertrager genannt, ist ein Apparat, der thermische Energie von einem Stoffstrom auf einen anderen überträgt. Als zu erwärmender Stoffstrom gilt in dieser Ausführungsform das flüssige Filtrat. In diesem ersten Stoffstrom ist der als Wärmetauscher ausgebildete Kondensator in einer Reihe zwischen Filtermedium und Verdunster stromabwärts des Filtermediums und stromaufwärts des Verdunsters angeordnet. Der zweite Stoffstrom wird durch das verdunstete Filtrat gebildet. Dieses wird durch das flüssige Filtrat abgekühlt, wodurch es kondensieren kann. Umgekehrt dient das flüssige Filtrat als Kühlmedium für das verdunstete Filtrat und wird seinerseits erwärmt.

Eine weitere Variante besteht darin, dass die Kühlung bei der Kondensation durch Umgebungsluft erfolgt. Der Kondensator ist dann als Wärmetauscher ausgebildet und so im Schienenfahrzeug angeordnet, dass über- oder durchströmende Umgebungsluft des Schienenfahrzeugs als Kühlmedium für das stromabwärts des Verdunsters dem Kondensator zugeführte verdunstete Filtrat dient. Dieses gibt seine Wärme über den Kondensator an die Umgebungsluft des Schienenfahrzeugs ab und kann so im Kondensator kondensieren.

Eine weitere Weiterbildung der Erfindung besteht darin, dass die thermische Energie zur Verdunstung des flüssigen Filtrats durch Abwärme, insbesondere mittels eines zu kühlenden Kühlmittels eines Kühlprozesses, einer, insbesondere zu kühlenden, Komponente des Schienenfahrzeugs zugeführt wird. Die Komponente ist geeignet ausgebildet, ausreichend Abwärme abzugeben. Als Komponenten kommen daher insbesondere in Frage Komponenten der Leistungselektronik wie beispielsweise Stromrichter oder Antriebsmotoren, Transformatoren, gegebenenfalls auch Batterien oder deren Ladegeräte oder Klimaanlagen. Insbesondere Transformatoren bieten den Vorteil einer eigenen Kühlung, an die sich der Kühlkreislauf leicht anschließen lässt. Die Abwärme kann wiederum über einen Wärmetauscher auf das noch flüssige Filtrat übertragen werden. Weitergebildet umfasst das Schienenfahrzeug daher einen Wärmetauscher, der mit einem Kühlkreislauf der Komponente des Schienenfahrzeugs so verbunden ist, dass thermische Energie von der Komponente des Schienenfahrzeugs auf das flüssige Filtrat übertragen wird. Wiederum bildet das Kühlmedium des Kühlkreislaufs der zu kühlenden Komponente den zu kühlenden Stoffstrom im Wärmetauscher, wobei das flüssige Filtrat den zu erwärmenden Stoffstrom im Wärmetauscher darstellt. Thermische Energie wird also von dem Kühlmittel zur Kühlung der Komponente des Schienenfahrzeugs auf das flüssige Filtrat übertragen, wodurch sich dieses erwärmt und/oder verdampft und wodurch sich das Kühlmittel selbst abkühlt.

Zusätzlich oder alternativ erfolgt die Zufuhr der thermischen Energie mittels einer Heizung, insbesondere einer elektrischen Heizung.

Wie bereits ausgeführt kann das flüssige Filtrat einem Verdunster zugeführt werden, der als Rieselfilmverdunster ausgebildet ist. Das flüssige Filtrat kann also bereits vor dem Eintritt in den Verdunster erwärmt werden. Der Wärmetauscher ist somit stromaufwärts des Verdunsters vorzusehen. Dieses Verfahren kann somit nach dem Prinzip der konvektiv unterstützten Verdunstung von Wasser in einem Rieselfilmverdunster in entgegen gerichtet strömender Luft arbeiten, kombiniert mit rohwassergekühlter Kondensation von sauberem Produktwasser bei gleichzeitiger Rückgewinnung der Verdunstungswärme. Das Rohwasser wird durch das flüssige Filtrat gebildet, das Produktwasser ist dann entsprechend das Kondensat. Ein Rieselfilmverdunster ist aus dem oben beschriebenen Verfahren der Siemens AG Namens "EvaCon" bekannt.

Weitergebildet umfasst somit der Verdunster den oben beschriebenen Wärmetauscher zur Übertragung der thermischen Energie auf das flüssige Filtrat zur Verdunstung des flüssigen Filtrats, der mit einem Kühlkreislauf der zu kühlenden Komponente des Schienenfahrzeugs so verbunden ist, dass thermische Energie von der Komponente des Schienenfahrzeugs auf das flüssige Filtrat übertragen wird. Die Abwärme der Komponente des Schienenfahrzeugs wird dem flüssigen Filtrat zugeführt.

Alternativ umfasst der Verdunster eine Heizung, beispielsweise eine elektrische Heizung. Oder stromaufwärts vor dem Verdunster ist eine Heizung, beispielsweise eine elektrische Heizung, angeordnet, die das flüssige Filtrat erwärmt.

Eine weitere Weiterbildung der erfindungsgemäßen Lösung sieht vor, dass das Konzentrat vor dem Sammeln im Abwasserbehälter gekühlt wird. Daher kann eine Kühlvorrichtung zur Kühlung des Konzentrats vorgesehen sein, welche insbesondere stromabwärts des Verdunsters und stromaufwärts des Abwasserbehälters angeordnet ist, so dass das Konzentrat vor der Zuführung zu dem Abwasserbehälter und vor dem Sammeln im Abwasserbehälter gekühlt wird.

Gemäß einer weiteren Weiterbildung wird vor der Aufspaltung des Abwassers in den Filterkuchen und das flüssige Filtrat das Abwasser im Abwasserbehälter gesammelt.

Weitergebildet umfasst der Abwasserbehälter das Filtermedium. Dieses kann beispielsweise als Sieb vorgegebener Maschenweite zwischen einem Anschluss zur Zuführung von Abwasser, beispielsweise aus einem abwasserführenden Leitungssystem des Schienenfahrzeugs, und einer Entnahmestelle von Abwasser aus dem Abwasserbehälter zur Abwasserwiederaufbereitung, beispielsweise im Bereich der genannten Entnahmestelle von Abwasser aus dem Abwasserbehälter, angeordnet sein.

Neben der Entnahmestelle, also einem Anschluss zur Entnahme von Abwasser aus dem Abwasserbehälter zur Abwasserwiederaufbereitung, kann der Abwasserbehälter weitere Anschlüsse umfassen, wie z.B. einen Anschluss zur Entnahme von Abwasser aus dem Abwasserbehälter zur Entsorgung des Filterkuchens, des Konzentrats und des restlichen Abwassers im Abwasserbehälter. Daneben kann ein separater Anschluss zur Zuführung des Konzentrats so am Abwasserbehälter angeschlossen sein, dass dieses nicht mehr durch das Filtermedium zum Anschluss zur Entnahme von Abwasser aus dem Abwasserbehälter zur Abwasserwiederaufbereitung transportiert wird.

Insbesondere erfolgt somit die Filterung und somit die Aufspaltung des Abwassers in den Filterkuchen und das flüssige Filtrat nach der Sammlung des Abwassers im Sammelbehälter und vor dem Entzug des flüssigen Filtrats.

Gemäß einer weiteren Weiterbildung wird dem Abwasserbehälter zur Durchführung der Verfahrensschritte nur so viel Flüssigkeit zur Wiederaufbereitung, insbesondere flüssiges Filtrat, welches in diesem Augenblick noch als Schwarzwasser bezeichnet werden kann, entzogen, dass eine vorgegebene Restmenge an Flüssigkeit im Abwasserbehälter verbleibt.

Dazu umfasst der Abwasserbehälter eine Entnahmestelle für das Abwasser zur Abwasserwiederaufbereitung, insbesondere das flüssige Filtrat, welche, insbesondere stromabwärts des Filtermediums, erhöht über einem Boden des Abwasserbehälters angeordnet ist, so dass eine vorgegebene Restmenge an Flüssigkeit im Abwasserbehälter verbleibt.

Die Erfindung lässt zahlreiche Ausführungsformen zu. Sie wird anhand der nachfolgenden Figur näher erläutert. Diese zeigt schematisch ein Funktionsdiagramm einer Ausgestaltung des erfindungsgemäßen Schienenfahrzeugs, welches auch das Verfahren zur Aufarbeitung von Abwasser des Schienenfahrzeugs veranschaulicht.

Wasser aus einem nicht dargestellten Frischwassertank wird, durch einen Schmutzfänger gefiltert, einem Waschbecken und gegebenenfalls auch einem WC-System 8 bereitgestellt. Die jeweiligen Abwässer werden einem Abwasserbehälter 6 zugeleitet. Das Abwasser des Waschbeckens dürfte, wenn es entsprechende Qualität aufweist, auf das Gleis abgelassen werden.

Der Anschluss zur Zuführung von Abwasser des Abwasserbehälters 6 oder auch Zulauf genannt befindet sich im Einbauzustand des Abwasserbehälters 6 an seiner Oberseite, einen Anschluss zur Absaugung und damit zur Entnahme von Abwasser aus dem Abwasserbehälter 6 befindet sich im Bereich seines Bodens 11.

Das Wasser wird nach dem Handwaschbecken oder dem WC 8 im Abwasserbehälter 6 gesammelt. Dort findet eine erste Trennung der Feststoffe von der Flüssigkeit mit einem Grobfilter 9 statt. Das Grobfilter 9 kann in einfacher Weise als Sieb vorgegebener Maschenweite zum Abscheiden von Feststoffen vorgegebener Mindestgröße aus der Flüssigkeit ausgebildet sein. Bevorzugt umfasst es einen Kulissenfilter, wie aus dem Stand der Technik bekannt. Der Feststoff wird im Abwasserbehälter 6 durch den Grobfilter 9 als Filterkuchen zurückgehalten. Das gefilterte Abwasser wird als Filtrat bezeichnet.

Eine Abwasserpumpe 13 fördert das Filtrat als Kühlmittel durch einen Kondensator 4. Die Abwasserpumpe 13 ist dabei drehzahlgeregelt. Ein Durchflusssensor 14 überwacht den Fluss an Abwasser zum Kondensator 4. Darüber hinaus kann eine Kühleinrichtung 12 zur Kühlung des Abwassers vorgesehen sein. Dem Abwasserbehälter 6 wird nur höchstens so viel flüssiges Filtrat entzogen, dass der verbleibende Filterkuchen eine vorgegebene Restmenge an Flüssigkeit umfasst. Dazu wird dem Abwasserbehälter 6 im unteren Bereich Wasser entnommen.

Dies könnte am tiefsten Punkt des Abwasserbehälters 6 erfolgen. In diesem Fall wäre es denkbar, dass alles Wasser aus dem Tank entzogen wird und die Feststoffe, die im Abwasserbehälter 6 verbleiben, antrocknen, wodurch sie beim Absaugen sehr schwer zu entfernen sind. Es ist daher sinnvoll, die Entnahme in einer bestimmten Höhe über dem Boden 11 anzuordnen, so dass immer eine Restmenge Wasser im Abwasserbehälter 6 verbleibt, damit die Feststoffe anschließend leichter abzusaugen sind. Diese Flüssigkeitsmenge wird Precharge genannt. Hier ist der Anschluss 10 zur Entnahme von Abwasser aus dem Abwasserbehälter 6 in einer vorgegebenen Höhe über dem Boden 11 des Abwasserbehälters 6 angeordnet.

Der Kondensator 4 ist als Wärmetauscher ausgebildet und hat zwei Funktionen. Er ist so angeschlossen, dass ihm das flüssige Filtrat stromabwärts des Grobfilters 9 und stromaufwärts eines Verdunsters 2 als Kühlmittel zugeführt wird, wobei es durch den Kondensator 4 fließt und sich dabei selbst erwärmt. Somit wird die beim Kondensationsvorgang abgegebene Wärme rückgeführt, was thermische Energie einspart. Im Kondensator 4 kann das Wasser allerdings nicht stark genug erwärmt werden. Die restliche Energie für eine effiziente Verdunstung wird durch eine Heizung 12 zugeführt. Die Heizung 12 umfasst hier ein elektrisches Heizelement, insbesondere einen Heizwiderstand, welches das flüssige Filtrat weiter erwärmt, insbesondere auf die notwendige Temperatur (>75°C) für die nachgelagerten Prozessschritte.

Anstelle einer elektrischen Heizung zur Erwärmung des Abwassers vor dem Verdunster 2 kann die Abwärme anderer Zugkomponenten genutzt werden. Auf einem Schienenfahrzeug gibt es verschiedene Komponenten, die zum Teil gekühlt werden müssen. Die Abwärme dieser Komponenten zu nutzen bedeutet nochmals auf dem Schienenfahrzeug Energie zu sparen.

Hierzu ist die Heizung 12 als Wärmetauscher ausgebildet, welcher dazu dient, thermische Energie in Form von Abwärme einer Komponente des Schienenfahrzeugs zuzuführen. Als Heizmedium könnte beispielsweise ein Kühlmedium eines Kühlprozesses zur Kühlung von leistungselektronischen Bauteilen wie Stromrichter oder von Transformatoren des Schienenfahrzeugs dienen.

Die Wärme wird bevorzugt übertragen durch einen separaten Kühlkreislauf mit einem Kühlmittel, das seinen Siedepunkt oberhalb der in der Abwasseraufbereitung auftretenden Maximaltemperatur und unterhalb der in der zu kühlenden Komponente auftretenden Maximaltemperatur hat. Dabei kann es sich um sauberes Kühlwasser (Siedepunkt bei Normaldruck 100 °C) oder um ein synthetisches Kühlmittel mit davon abweichendem Siedepunkt wie z.B. einem perfluorierten Keton handeln (Beispiele: Perfluoro-(isopropyl-1-methyl-2-oxapentyl)ketone, Siedepunkt 112 °C, Perfluoro-2,4-Bis(Perfluoropropoxy)Pentan-3-0ne, Siedepunkt 142°C).

Der Zwischenkreislauf mit einem separaten Fluid verhindert Anbackungen in der zu kühlenden Komponente, die zu einem Verlust an Kühlleistung und damit zum Ausfall durch Überhitzung führen könnten. Durch verdunstende Kühlmittel ist eine besonders effiziente Kühlung der zu kühlenden Komponenten gewährleistet: Durch latente Wärme wird bei gleichem Durchsatz des Kühlfluids wesentlich mehr Wärme übertragen als durch sensible Wärme. Durch Kondensation wiederum wird die Wärme besonders effizient auf das aufzuheizende Abwasser übertragen. Insgesamt wird so ein besonders kompakter Aufbau gewährleistet.

Die gesamte Erwärmung des Abwassers könnte so durch die zur Verfügung stehende Abwärme geschehen.

Nach der Erwärmung wird das Filtrat in einen Verdunster 2 geleitet. Dort wird das Wasser im Gegenstrom mit Luft gekühlt und die Luft im Gegenzug erwärmt (>75°C) und befeuchtet (nahe 100 % relative Feuchte). Diese Luft wird zum Kondensator 4 geleitet. Bei der Luft handelt es sich um aus dem Fahrzeuginnenraum 19 angesaugte Luft. Hier ist ein Ventilator 15 symbolisch gezeichnet, um die Luftförderung zu veranschaulichen. Der Ventilator 15 sorgt für einen gleichbleibenden, kühlenden Luftstrom. Da es sich üblicherweise um klimatisierte Luft handelt, kann deren Temperatur und Feuchtegehalt tatsächlich als konstant angenommen werden. Diese wird mittels Temperatur- und Feuchtesensoren 16 und 17 überwacht. Auch ein Durchflusssensor 18 ist hier vorgesehen. Der Ventilator sowie die Sensoren 16, 17 und 18 sind hier Teil der Vorrichtung 3 zur Zuführung und zur Überströmung des zu verdunstenden Abwassers von Luft aus dem Schienenfahrzeug, die in einem Einlass im Verdunster 2 mündet.

Nasszellen in Schienenfahrzeugen haben üblicherweise eine Luftabsaugung, bei der Luft entnommen wird, um in der Nasszelle einen geringen Unterdruck zu erzeugen. Dies soll verhindern, dass Gerüche aus der Nasszelle austreten. Diese Luftabsaugung kann an das hier beschriebene System angeschlossen werden, so dass für die benötigte Luftabsaugung die Nasszellenluft benutzt werden kann. Der Lüfter 15 sollte drehzahlgeregelt sein, so dass die Luftmenge vom System geregelt werden kann.

Die trockene, kalte Luft aus dem Innenraum 19 wird durch das verrieselte Abwasser erwärmt und befeuchtet. Dabei kühlt sich das verrieselte Abwasser so stark ab, dass gegebenenfalls auf eine weitere Kühlung vor dessen Eintritt in den Kondensator 4 verzichtet werden kann. Der erwärmte und befeuchtete Luftstrom wird anschließend in den Kondensator 4 geleitet, hier überwacht durch Temperatur- und Feuchtesensoren 20 und 21.

Im Kondensator 4 wird die Luft abgekühlt und es kondensiert Wasser aus und in einem Kondensatbehälter 7 gesammelt. Allgemein handelt es sich um Aufspaltung des ursprünglich gefilterten Abwassers in ein Kondensat und ein Konzentrat durch ein thermisches Trennverfahren, hier durch Verdunstung und anschließende Kondensation. Das so durch Kondensation gewonnene Wasser ist annähernd frei von Fremdstoffen und völlig frei von Feststoffen. Die genaue Wassermenge, die bei dem Prozess ausfällt, hängt von den Temperaturen und der Luftfeuchtigkeit ab. Die abgekühlte Luft wird nach Passage des Kondensators 4 aus dem Fahrzeug geleitet und an die Umgebung des Schienenfahrzeugs abgegeben. Hierzu ist ein Luftauslass 5 vorgesehen. Dadurch wird ein nicht unerheblicher Anteil des Wassers über die Gasphase aus dem Fahrzeug geleitet. Somit wird dieses Wasser nicht direkt auf das Gleis gelassen, da es als feuchte Luft ausgeleitet wird. Dadurch müssen nicht die Vorschriften zur Ausleitung des Wassers auf das Gleis eingehalten werden. Zur Förderung der Luft durch vom Verdunster zum Kondensator und/oder durch den Kondensator kann ein weiterer Ventilator oder Lüfter vorgesehen sein.

Das Kondensat kann entweder zum Spülen des WC-Systems 8 benutzt werden oder auf das Gleis abgelassen werden. Allgemein wird das Kondensat einem Grauwasserprozess zugeführt. Es kann eine Pumpe 23 benötigt werden, um das Kondensat zum WC-System 8 oder auf das Gleis zu fördern. Je nach Anordnung der Komponenten kann dies aber auch über die Schwerkraft geschehen. Ventile können hierbei den Wasserfluss steuern.

Hier wird das Kondensat in einem Kondensatbehälter 7 aufgefangen. Dieser ist vor dem WC-Modul 8 angeordnet und entsprechend gegebenenfalls eine Kondensatpumpe 23 zwischen Kondensator und Kondensatbehälter 7. Er könnte auch gleichzeitig als Grauwasserbehälter, also auch zum Auffangen von Waschwasser aus dem Waschbecken dienen.

Gemäß dieser Ausgestaltung dient er als Spülwasserbehälter für das WC-System 8. Er weist einen Überlauf 24 aus, der in einem Grauwasserauslass auf die Gleise mündet. Überschüssiges Kondensat wird so auf die Gleise aus dem Schienenfahrzeug herausgeführt.

Das WC-System 8 wird nun aus dem Kondensatbehälter 7 gespeist. Hat dieser einen niedrigen Füllstand, wird das Kondensat über die Rohrleitung mit der Kondensatpumpe 23 aus dem Kondensator 4 in den Kondensatbehälter gefördert. Ist im Kondensator 4 kein Wasser verfügbar, wird Frischwasser aus dem Frischwassertank benutzt. Auf diese Weise spart man einen zweiten Zulauf zum WC-Modul 8 und eine entsprechende Steuerung, wann durch welchen Zulauf Wasser zu beziehen ist.

Im Sumpf des Verdunsters 2 sammeln sich hierbei die nicht flüchtigen Stoffe und nicht verdunstetes Wasser an. Dieses Konzentrat muss regelmäßig aus dem Verdunster 2 gespült werden. Dies kann über ein Ventil und eine Pumpe gesteuert wieder in den Abwasserbehälter 6 gefördert werden, wo es gesammelt wird. Der Zulauf in den Abwasserbehälter 6 sollte so verlegt sein, dass die Flüssigkeit nicht erneut den Grobfilter 9 passieren muss.

Dadurch lässt sich viel Frischwasser sparen und zugleich der Wartungszyklus für das Absaugen des Abwasserbehälters 6 deutlich verlängern. Für die Absaugung kann im Abwasserbehälter 6 zusätzlich eine Spüldüse vorgesehen sein. Durch sie kann dem Abwasserbehälter 6 Flüssigkeit zugeführt werden, um die Feststoffe im Abwasserbehälter 6 zu verdünnen, so dass sie abgesaugt werden können.

Die für den Betrieb im Zug bevorzugte Lösung umfasst die beschriebene Luftkühlung, welche eine signifikante Kosten-, Raum- und Gewichteinsparung bedeutet. Weiterhin kann der Kondensator 4 vergleichsweise klein dimensioniert werden, was ebenfalls Kosten, Raum und Gewicht einspart. Durch den somit geringeren flüssigseitigen Druckverlust kann die Abwasserpumpe 13 kleiner ausgeführt werden. Zudem kann die Anordnung von Verdunster 2 und Kondensator 4 flexibler gestaltet werden, da die Luftzirkulation mit großen Querschnitten verbunden ist und somit bei einem vergleichbaren geschlossenen Kreislauf weniger konstruktive Freiheiten zulässt. Gegebenenfalls kann auch auf einen zusätzlichen Lüfter verzichtet werden, da die bestehende Luftabsaugung der Nasszelle genutzt werden kann.

Für die Regelung des Systems sind diverse Sensoren vorteilhaft, die die Funktion überwachen. Die Steuerung des Aufbereitungssystems kann aufgrund der erfassten Werte die Stoffströme regeln. Da der gesamte Prozess bei Umgebungsdruck läuft, liefern die Drehzahlen der Fördermaschinen Informationen über die geförderten Volumen- bzw. Massenströme. Weiterhin können folgende Sensoren zusätzlich zu bestehenden Sensoren vorgesehen sein.

Am Abwassertank 6 wird ein Füllstandsensor 25 benötigt, der das System frei gibt, wenn genug Wasser für die Entnahme im Behälter ist. Fest- und Flüssigphase des Abwassers werden im Abwasserbehälter 6 getrennt gespeichert werden. Die Entnahme sollte nur bei vorliegender flüssiger Phase erfolgen. Da die flüssige Phase durch den Aufbereitungsprozess permanent abgeführt wird, ist der Füllstand des Feststoffkompartiment für das Serviceintervall verantwortlich. Dies würde dann ebenfalls einen Füllstandsensor 24 im Feststoffkompartiment erfordern. Das System sollte nur in Betrieb gehen, wenn ein Mindestfüllstand erreicht ist. Hierfür wird dieser Sensor benötigt, der nicht zum Standard am Abwassertank 6 gehört.

Im Kondensatbehälter 7 wird ein Sensor benötigt, der dort den Füllstand erfasst. Ist der Kondensatbehälter 7 leer, sollte nicht versucht werden Wasser für das WC-System zu entnehmen. Für die Regelung der Wasser- und Luftströme sollten Zustandsgrößen der Luft erfasst werden. Hierzu werden in der Luftansaugung ein Sensor für die Lufttemperatur 17, sowie einer für die Luftfeuchte 16 benötigt. Ebenso müssen Temperatur 20 und Feuchte 21 der Luft nach der Verdunstereinheit 2 gemessen werden. Eine Hohe Luftsättigung bei hoher Temperatur sind hier die zu erreichenden Parameter. Ein weiterer Sensor 22 sollte die Temperatur des Wassers vor dem Verdunster 2 erfassen. Diese Temperatur gibt zusammen mit den Zustandsgrößen der einströmenden Luft Aufschluss über die mögliche Verdunstungsrate und ist wichtig für die Regelung der Heizung 12 bzw. für die Wärmezufuhr.

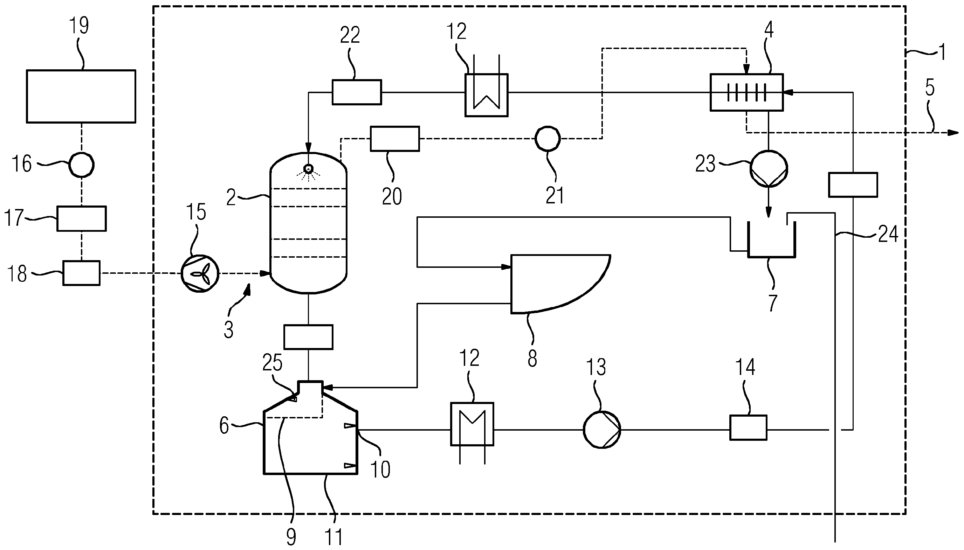

## Patentansprüche

1. Schienenfahrzeug mit wenigstens einer Vorrichtung zur Abwasserwiederaufbereitung (1), umfassend wenigstens einen Verdunster (2) zur Verdunstung des Abwassers durch Zuführung von thermischer Energie und überströmender Luft, **dadurch gekennzeichnet, dass** der Verdunster (2) eine Vorrichtung (3) zur Zuführung und zur Überströmung des zu verdunstenden Abwassers von Luft aus dem Schienenfahrzeug umfasst.

2. Schienenfahrzeug nach Anspruch 1, **dadurch gekennzeichnet, dass** es einen Kondensator (4) umfasst, der stromabwärts des Verdunsters (2) angeordnet ist, so dass die Luft im Anschluss an die Überströmung des zu verdunstenden Abwassers dem Kondensator (4) zugeführt wird.

3. Schienenfahrzeug nach einem der Ansprüche 1 oder 2, **dadurch gekennzeichnet, dass** die Vorrichtung zur Abwasserwiederaufbereitung (1) derart ausgebildet ist, dass die Luft im Anschluss an die Umgebung des Schienenfahrzeugs abgegeben wird.

4. Schienenfahrzeug nach einem der Ansprüche 1 bis 3, **dadurch gekennzeichnet, dass** der Verdunster (2) als Gegenstromverdunster oder als Rieselfilmverdunster ausgebildet ist.

5. Schienenfahrzeug nach Anspruch 2, **dadurch gekennzeichnet, dass** der Kondensator (4) als Wärmetauscher ausgebildet und so zu einem Abwasserbehälter (6), aus welchem das Abwasser zur Abwasseraufbereitung entnommen wird, und so zum Verdunster (2) angeordnet ist, dass das Abwasser stromabwärts des Abwasserbehälters (6) und stromaufwärts des Verdunsters (2) dem Kondensator (4) zugeführt wird und als Kühlmedium für das stromabwärts des Verdunsters (2) dem Kondensator (4) zugeführte verdunstete Abwasser dient.

6. Schienenfahrzeug nach Anspruch 2, **dadurch gekennzeichnet, dass** der Kondensator (4) als Wärmetauscher ausgebildet, wobei Luft aus dem Schienenfahrzeug als Kühlmedium dient.

7. Schienenfahrzeug nach einem der Ansprüche 2, 5 oder 6, **dadurch gekennzeichnet, dass** es einen Kondensatbehälter (7) zum Auffangen von Kondensat umfasst, welcher als Spülwasserbehälter einer Toilette (8) dient.

8. Schienenfahrzeug nach einem der Ansprüche 1 bis 7, **dadurch gekennzeichnet, dass** es ein Filtermedium (9) zur Aufspaltung von Abwasser in einen Filterkuchen und ein flüssiges Filtrat umfasst, wobei das flüssige Filtrat als Abwasser dem Verdunster (2) zugeführt wird.

9. Schienenfahrzeug nach einem der Ansprüche 1 bis 8, **dadurch gekennzeichnet, dass** es einen Abwasserbehälter (6) umfasst, welcher eine Entnahmestelle (10) für das Abwasser aufweist, welche erhöht über einem Boden (11) des Abwasserbehälters (6) angeordnet ist, so dass eine vorgegebene Restmenge an Flüssigkeit im Abwasserbehälter (6) verbleibt.

10. Schienenfahrzeug nach Anspruch 5, **dadurch gekennzeichnet, dass** sie eine Kühlvorrichtung (12) zur Kühlung des Konzentrats aus dem Verdunster (2) umfasst, welche stromaufwärts des Abwasserbehälters (6) angeordnet ist.

11. Schienenfahrzeug nach einem der Ansprüche 1 bis 10, **dadurch gekennzeichnet, dass** es einen Wärmetauscher (12) umfasst, der mit einem Kühlkreislauf einer Komponente des Schienenfahrzeugs so verbunden ist, dass thermische Energie von dem Kühlmittel zur Kühlung der Komponente des Schienenfahrzeugs auf das zu verdunstende Abwasser übertragen wird.

12. Verfahren zur Abwasserwiederaufbereitung in einem Schienenfahrzeug, umfassend eine Verdunstung von Abwasser des Schienenfahrzeugs durch Zuführung von thermischer Energie und überströmender Luft, **dadurch gekennzeichnet, dass** Luft aus dem Schienenfahrzeug zur Überströmung genutzt wird.

## Claims

1. Rail vehicle with at least one apparatus for wastewater reprocessing (1), comprising at least one evaporator (2) for evaporating the wastewater through supply of thermal energy and of air flowing over, **characterized in that** the evaporator (2) comprises an apparatus (3) for supplying air from the rail vehicle and for causing said air to flow over the wastewater to be evaporated.

2. Rail vehicle according to Claim 1, **characterized in that** it comprises a condenser (4) which is arranged downstream of the evaporator (2) such that the air, after flowing over the wastewater to be evaporated, is supplied to the condenser (4).

3. Rail vehicle according to either of Claims 1 and 2, **characterized in that** the apparatus for wastewater reprocessing (1) is designed in such a way that the air is subsequently discharged to the surroundings of the rail vehicle.

4. Rail vehicle according to one of Claims 1 to 3, **characterized in that** the evaporator (2) is in the form of a counterflow evaporator or in the form of a trickle film evaporator.

5. Rail vehicle according to Claim 2, **characterized in that** the condenser (4) is in the form of a heat exchanger and is arranged in relation to a wastewater container (6), from which the wastewater is removed for wastewater processing, and in relation to the evaporator (2) in such a way that the wastewater is supplied downstream of the wastewater container (6) and upstream of the evaporator (2) to the condenser (4) and serves as cooling medium for the evaporated wastewater supplied downstream of the evaporator (2) to the condenser (4) .

6. Rail vehicle according to Claim 2, **characterized in that** the condenser (4) is in the form of a heat exchanger, wherein air from the rail vehicle serves as cooling medium.

7. Rail vehicle according to one of Claims 2, 5 and 6, **characterized in that** it comprises a condensate container (7) for collecting condensate, which serves as a flushing-water container of a toilet (8).

8. Rail vehicle according to one of Claims 1 to 7, **characterized in that** it comprises a filter medium (9) for splitting wastewater into a filter cake and a liquid filtrate, wherein the liquid filtrate is supplied as wastewater to the evaporator (2).

9. Rail vehicle according to one of Claims 1 to 8, **characterized in that** it comprises a wastewater container (6) which has a removal point (10) for the wastewater, said removal point being arranged at a height above a base (11) of the wastewater container (6), with the result that a predefined residual quantity of liquid remains in the wastewater container (6).

10. Rail vehicle according to Claim 5, **characterized in that** it comprises a cooling apparatus (12) for cooling the concentrate from the evaporator (2), which cooling apparatus is arranged upstream of the wastewater container (6).

11. Rail vehicle according to one of Claims 1 to 10, **characterized in that** it comprises a heat exchanger (12) which is connected to a cooling circuit of a component of the rail vehicle in such a way that thermal energy is transferred from the cooling medium for cooling the component of the rail vehicle to the wastewater to be evaporated.

12. Method for wastewater reprocessing in a rail vehicle, comprising evaporating wastewater of the rail vehicle through supply of thermal energy and of air flowing over, **characterized in that** air from the rail vehicle is used for the flowing-over.

## Revendications

1. Véhicule ferroviaire ayant au moins un dispositif de retraitement (1) des eaux usées, comprenant au moins un évaporateur (2) pour l'évaporation des eaux usées par apport d'énergie thermique et d'air de transfert, **caractérisé en ce que** l'évaporateur (2) comprend un dispositif (3) pour l'apport et le transfert des eaux usées évaporées par de l'air du véhicule ferroviaire.

2. Véhicule ferroviaire suivant la revendication 1, **caractérisé en ce qu'**il comprend un condenseur (4) monté en aval de l'évaporateur (2) de manière à envoyer au condenseur (4) l'air en plus au transfert des eaux usées à évaporer.

3. Véhicule ferroviaire suivant l'une des revendications 1 ou 2, **caractérisé en ce que** le dispositif de retraitement (1) des eaux usées est constitué pour céder l'air en plus à l'atmosphère ambiante du véhicule ferroviaire.

4. Véhicule ferroviaire suivant l'une des revendications 1 à 3, **caractérisé en ce que** l'évaporateur (2) est constitué sous la forme d'une évaporateur à contre-courant ou d'un évaporateur à ruissellement.

5. Véhicule ferroviaire suivant la revendication 2, **caractérisé en ce que** le condenseur (4) est constitué sous la forme d'un échangeur de chaleur et est disposé par rapport à un récipient (6) d'eaux usées, dont les eaux usées doivent être prélevées pour le retraitement des eaux usées, et par rapport à l'évaporateur (2), de manière à envoyer au condenseur (4) les eaux usées en aval du récipient (6) d'eaux usées et en amont de l'évaporateur (2), et des eaux usées évaporées envoyées au condenseur (4) servent de fluide de refroidissement pour ce qui est en aval de l'évaporateur (2).

6. Véhicule ferroviaire suivant la revendication 2, **caractérisé en ce que** le condenseur (4) est constitué sous la forme d'un échangeur de chaleur, de l'air du véhicule ferroviaire servant de fluide de refroidissement.

7. Véhicule ferroviaire suivant l'une des revendications 2, 5 ou 6, **caractérisé en ce qu'**il comprend un récipient (7) de condensat pour capter du condensat, qui sert de récipient d'eau de chasse d'une toilette (8).

8. Véhicule ferroviaire suivant l'une des revendications 1 à 7, **caractérisé en ce qu'**il comprend un milieu (9) filtrant pour la séparation d'eaux usées en un gâteau de filtre et en filtrat liquide, le filtrat liquide étant envoyé comme eaux usées à l'évaporateur (2).

9. Véhicule ferroviaire suivant l'une des revendications 1 à 8, **caractérisé en ce qu'**il comprend un récipient (6) d'eaux usées, qui a un point (10) de prélèvement des eaux usées, qui est surélevé au-dessus d'un fond (11) du récipient (6) d'eaux usées, de manière à ce qu'il subsiste une quantité restante donnée à l'avance de liquide dans le récipient (6) d'eaux usées.

10. Véhicule ferroviaire suivant la revendication 5, **caractérisé en ce qu'**il comprend un dispositif (12) de refroidissement pour refroidir le concentrât de l'évaporateur, dispositif (12) qui est disposé en amont du récipient (6) d'eaux usées.

11. Véhicule ferroviaire suivant l'une des revendications 1 à 10, **caractérisé en ce qu'**il comprend un échangeur de chaleur (12), qui communique avec un circuit de refroidissement d'un élément du véhicule ferroviaire de manière à ce que de l'énergie thermique soit transmise du fluide de refroidissement aux eaux usées à évaporer pour le refroidissement de l'élément du véhicule ferroviaire.

12. Procédé de retraitement des eaux usées dans un véhicule ferroviaire, comprenant une évaporation d'eaux usées du véhicule ferroviaire par apport d'énergie thermique et d'air de transfert, **caractérisé en ce que** l'on utilise l'air du véhicule ferroviaire pour le courant de transfert.
